# EUROPÄISCHE PATENTSCHRIFT

(11) **EP 2 320 095 B1**
(45) Veröffentlichungstag und Bekanntmachung des Hinweises auf die Patenterteilung: **12.04.2017**
(21) Anmeldenummer: 10174444.9
(22) Anmeldetag: 30.08.2010
(51) Int. Cl.: F15B 11/17, B62D 5/06, F01P 7/04

(54) **Hydraulische Baugruppe**
Hydraulic assembly
Ensemble hydraulique

(30) Priorität: 06.11.2009 DE 102009052258
(43) Veröffentlichungstag der Anmeldung: 11.05.2011
(73) Patentinhaber: CLAAS Selbstfahrende Erntemaschinen GmbH, 33428 Harsewinkel (DE)
(72) Erfinder: Gausmann, Ludger, 49170, Hagen (DE)

(56) Entgegenhaltungen:
- DE-A1- 19 825 759
- US-A1- 2005 217 260
- US-A1- 2006 196 720

## Beschreibung

Die vorliegende Erfindung betrifft eine hydraulische Baugruppe für den Antrieb eines Lüfters in einem Nutzfahrzeug, insbesondere einem landwirtschaftlichen Nutzfahrzeug.

Ein solches Fahrzeug hat im Allgemeinen einen Verbrennungsmotor, der eine hohe mechanische Leistung für die Fortbewegung des Fahrzeugs sowie, nach Bedarf, zum Antreiben diverser Arbeits- und Hilfsaggregate bereitstellt. Zu den Hilfsaggregaten zählt auch ein Lüfter, der einen Kühlluftstrom über einen Motorkühler und/oder diverse andere Kühler des Fahrzeugs antreibt. Um eine gute Kühlwirkung bei geringem Einsatz an Antriebsenergie zu erreichen, sollte der Lüfter auf mechanischem Weg, ohne eine dazwischen liegende Energieumwandlungsstufe wie etwa eine elektrische Maschine, an den Verbrennungsmotor gekoppelt sein.

Der Kühlungsbedarf ist nicht strikt mit der Motordrehzahl korreliert; so ist bei einem Kaltstart oder niedrigen Außentemperaturen der Kühlungsbedarf unabhängig von der Motorlast gering. Ein als Motordrückung bezeichneter Betriebszustand zeichnet sich gerade durch das Zusammentreffen von niedrigen Drehzahlen und hohem Kühlungsbedarf aus. Es ist daher notwendig, das Verhältnis zwischen Motordrehzahl und Drehzahl des Lüfters variieren zu können. Aus US 4 738 330 und DE 198 25 759 A1 ist es bekannt, hierfür zwischen den Verbrennungsmotor und den Lüfter einen Hydraulikkreis einzufügen, der eine von dem Verbrennungsmotor angetriebene verstellbare Pumpe und einen den Lüfter antreibenden hydraulischen Motor umfasst.

DE 198 25 759 A1 beschreibt insbesondere eine hydraulische Baugruppe für ein Nutzfahrzeug, die einen ersten Hydraulikkreis mit einer ersten Pumpe, die hydraulische Antriebsenergie für einen Stellantrieb einer Servolenkung liefert, und einen zweiten Hydraulikkreis umfasst, in dem eine zweite Pumpe einen hydraulischen Lüftermotor antreibt. Der erste Hydraulikkreis enthält ein Reservoir für Hydraulikfluid, und beide Hydraulikkreise hängen über einen gemeinsamen Leitungsabschnitt zusammen, der einen Kühler und einen Filter umfasst. Wenn die Pumpen beider Hydraulikkreise in Betrieb sind, addieren sich ihre Durchsätze an Kühler und Filter, und der daraus resultierende hohe Druckabfall auf dem gemeinsamen Leitungsabschnitt erfordert eine hohe Antriebsleistung an beiden Pumpen. Da die Pumpe des zweiten Hydraulikreises nur Öl ansaugen kann, das den Kühler durchlaufen hat, dauert es nach einem Kaltstart bei kaltem Wetter beträchtliche Zeit, bis das Öl des zweiten Hydraulikkreises eine stationäre Betriebstemperatur erreicht, in der es dünnflüssig genug für einen energieeffizienten Betrieb ist.

Aufgabe der Erfindung ist, die Energieeffizienz einer hydraulischen Baugruppe der oben beschriebenen Art zu verbessern.

Die Aufgabe wird gelöst, indem bei einer hydraulischen Baugruppe für ein insbesondere landwirtschaftliches Nutzfahrzeug mit einem ersten Hydraulikkreis, in dem eine erste Pumpe, ein Stellantrieb, eine Servolenkung, ein Kühler für in dem ersten Hydraulikkreis zirkulierendes Hydraulikfluid und ein Reservoir in Reihe verbunden sind, und einem zweiten Hydraulikkreis, in dem eine zweite Pumpe und ein hydraulischer Lüftermotor in Reihe verbunden sind und der einen Leitungsabschnitt mit dem ersten Hydraulikkreis gemeinsam hat, die zwei Hydraulikkreise im gemeinsamen Leitungsabschnitt gegenläufige Zirkulationsrichtungen aufweisen. Dadurch entspricht der Durchsatz im gemeinsamen Leitungsabschnitt der Differenz anstatt der Summe der Förderraten der Pumpen. Da die zum Aufrechterhalten des Fluidstroms im gemeinsamen Leitungsabschnitt erforderliche Leistung proportional zum Quadrat des Durchsatzes ist, führt diese Maßnahme zu einer Verbesserung der Energieeffizienz.

Zweckmäßig ist ferner, dass der Kühler im ersten Hydraulikkreis stromabwärts von dem gemeinsamen Leitungsabschnitt angeordnet ist. Indem folglich Hydraulikfluid den zweiten Hydraulikkreis durchläuft, bevor es den Kühler erreicht, kann es nach einem Kaltstart zügig eine geeignete Betriebstemperatur erreichen, in der es dünnflüssig genug für einen energieeffizienten Betrieb ist.

Im Dauerbetrieb, wenn das Hydraulikfluid warm und dünnflüssig ist, kann ein Teil von ihm als Lecköl an Pumpe und Motor des zweiten Hydraulikkreises entweichen und über Leckleitungen zurück zum Tank gelangen. Dieses Leckfluid bleibt ungekühlt, wenn der Kühler stromabwärts vom gemeinsamen Leitungsabschnitt angeordnet ist, erwärmt den Tankinhalt und steigert dadurch zusätzlich die Leckrate. Um dies zu vermeiden, kann auch eine Platzierung des Kühlers stromaufwärts vom gemeinsamen Leitungsabschnitt zweckmäßig sein.

Wenn der gemeinsame Leitungsabschnitt im ersten Hydraulikkreis stromabwärts von der ersten Pumpe und dem Stellantrieb angeordnet ist, ist Hydraulikfluid, das von der zweiten Pumpe angesaugt wird, durch Abwärme der ersten Pumpe und des Stellantriebs und von diesen geleistete Arbeit vorgewärmt.

Da das im zweiten Hydraulikkreis zirkulierende Hydraulikfluid ständig mit einer dem Durchsatz des ersten Hydraulikkreises entsprechenden Rate ausgetauscht wird, kann eine ausreichende Filterung des Hydraulikfluids durch einen im ersten Hydraulikkreis außerhalb des gemeinsamen Leitungsabschnitts angeordneten Filter gewährleistet werden. Die Pumpe des zweiten Hydraulikkreises braucht daher nicht die zum Hindurchpressen des Hydraulikfluids durch den Filter erforderliche Antriebsleistung aufzubringen, was die Energieeffizienz nochmals verbessert.

Während der Durchsatz des ersten Hydraulikkreises nur beschränkt veränderlich ist, da die Antriebsleistung für den Stellantrieb der Servolenkung jederzeit zur Verfügung stehen muss, kann der Durchsatz des zweiten Hydraulikkreises in Anpassung an die jeweils benötigte Lüfterleistung in weiten Grenzen variabel sein. Unter dem Gesichtspunkt der Minimierung des Druckabfalls auf dem gemeinsamen Leitungsabschnitt ist es zweckmäßig, wenn der Durchsatz der zweiten Pumpe um denjenigen der ersten schwanken kann, so dass der zeitlich gemittelte Durchsatz auf dem gemeinsamen Leitungsabschnitt Werte nahe Null annehmen kann.

Um eine schnelle Erwärmung der gesamten Baugruppe bei einem Kaltstart zu ermöglichen, kann zweckmäßigerweise ein Wegeventil vorgesehen sein, um den Kühler aus dem ersten Hydraulikkreis auszukoppeln.

Vorzugsweise ist das Wegeventil im ersten Hydraulikkreis zwischen dem gemeinsamen Leitungsabschnitt und dem Kühler angeordnet, so dass der gemeinsame Leitungsabschnitt nicht mit ausgekoppelt wird.

Das Wegeventil kann durch einen an seinem Einlassanschluss anliegenden Druck gesteuert sein. Dieser Druck wird insbesondere dann hoch sein, wenn das Hydraulikfluid kalt und dementsprechend zäh ist. Vorzugsweise ist das Wegeventil jedoch anhand einer am ersten Hydraulikkreis herrschenden Temperatur gesteuert. Ein Temperaturfühler ist zur Regelung der Kühlertemperatur im Allgemeinen ohnehin vorhanden und kann mit geringem Aufwand zur Steuerung des Wegeventils nutzbar gemacht werden. Bevorzugt wird allerdings für die temperaturabhängige Steuerung ein Wachselement verwendet, bei dem die temperaturabhängige Ausdehnung einer thermisch an den ersten Hydraulikkreis gekoppelten Wachsmasse eine Stellbewegung des Wegeventils antreibt.

Ergänzend oder auch anstelle des Wegeventils kann ein Entlastungsventil zum Kühler parallel geschaltet sein, um diesen zu umgehen, wenn der Druckabfall am Kühler einen Grenzwert übersteigt.

Die Laufrichtung des Lüftermotors ist einer vorteilhaften Weiterbildung zufolge zwischen einer Normallaufrichtung und einer Ausnahmelaufrichtung umkehrbar. Durch Betrieb des Lüfters in der Ausnahmelaufrichtung können Ablagerungen von Staub oder Pflanzenresten, die sich bei längerem Betrieb in einem Strömungskanal der Kühlluft ablagern, gelöst und wenigstens zum Teil auch beseitigt werden. Auch dies steigert die Energieeffizienz des Lüfters, da eine gleiche Wärmeaustauschleistung am Kühler bei verringertem Lüfterdurchsatz erreichbar ist.

Die Laufrichtung des Lüfters kann durch den Fahrer des Fahrzeugs festlegbar sein. Einer vorteilhaften Weiterbildung zufolge kann ein Steuerelement vorgesehen sein, das immer dann, wenn die zweite Pumpe auf minimalen Durchsatz, idealerweise Nulldurchsatz, heruntergeregelt ist, den Lüftermotor von der Ausnahmelaufrichtung auf die Normallaufrichtung umschaltet. So ist sichergestellt, dass bei jedem Start des Fahrzeugs der Lüfter in der Normallaufrichtung anläuft, und es genügt eine einmalige Betätigung eines Bedienelements, z.B. kurz vor Ausschalten des Verbrennungsmotors, um eine Reinigung des Luftkanals auszulösen und anschließend zum Normalbetrieb zurückzukehren.

Es besteht auch die Möglichkeit, eine Reinigung des Luftkanals automatisch mit Hilfe eines Steuerelements herbeizuführen, das eingerichtet ist, den Lüftermotor auf die Ausnahmelaufrichtung umzuschalten, wenn die Temperatur des Hydraulikfluids oder eines Kühlers über einer Grenztemperatur liegt.

Vorzugsweise nimmt ein solches Steuerelement die Umschaltung auf die Ausnahmelaufrichtung nur dann vor, wenn gleichzeitig mit der Überschreitung der Grenztemperatur auch der Durchsatz der zweiten Pumpe maximal ist, die Leistung des Lüfters also nicht mehr gesteigert werden kann.

Um die Umschaltung des Lüfters zwischen Normal- und Ausnahmelaufrichtung zu ermöglichen, ist vorzugsweise ein Wegeventil im zweiten Hydraulikkreis angeordnet, das einen Anschluss des Lüftermotors wahlweise mit einem Sauganschluss oder einem Druckanschluss der zweiten Pumpe verbindet.

In einem erfindungsgemäßen Nutzfahrzeug dient der Lüfter vorzugsweise nicht nur zur Belüftung des Kühlers des ersten Hydraulikkreises, sondern auch zur Belüftung eines Verbrennungsmotorkühlers und/oder eines Ladeluftkühlers und/oder eines Getriebeölkühlers. Dabei kann an jedem einzelnen dieser Kühler ein Temperaturfühler vorgesehen sein, um die Leistung des Lüfters jeweils anhand der Temperatur desjenigen Kühlers zu regeln, der den höchsten Luftbedarf aufweist.

Weitere Merkmale und Vorteile der Erfindung ergeben sich aus der nachfolgenden Beschreibung von Ausführungsbeispielen unter Bezugnahme auf die beigefügten Figuren.

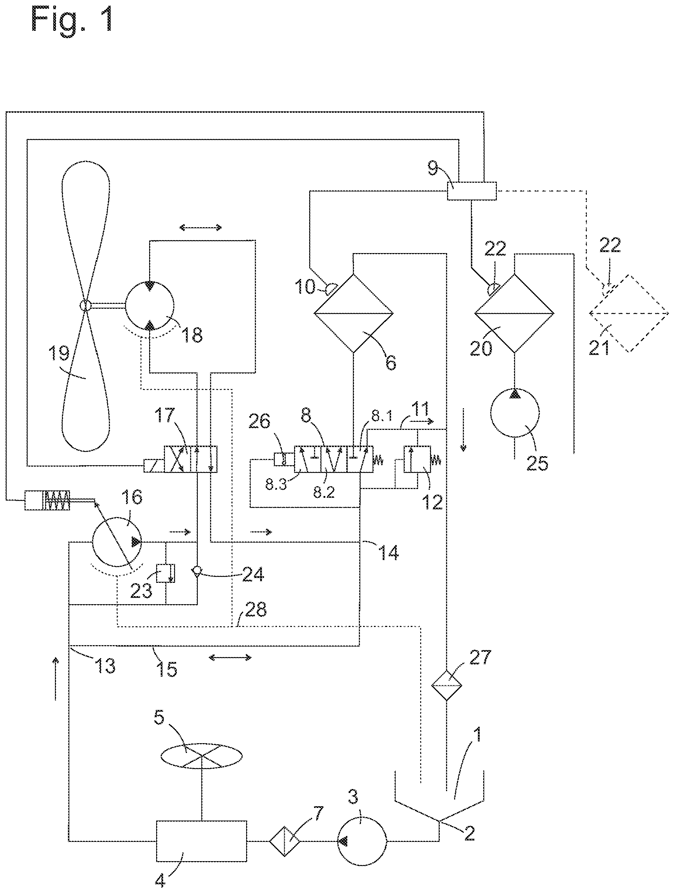

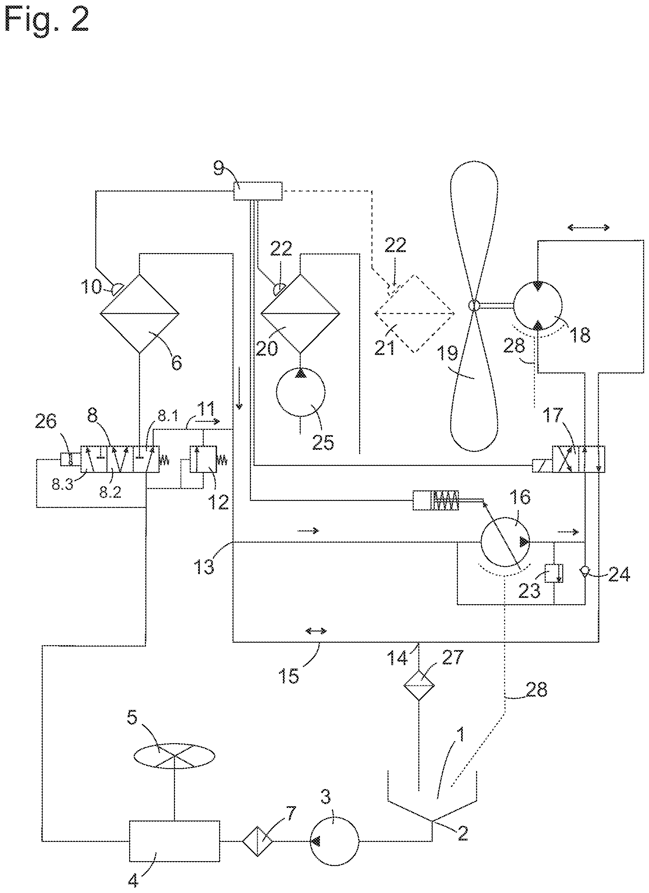

- Fig. 1 und 2: zeigen jeweils ein Hydraulikdiagramm einer erfindungsgemäßen Lüftungsbaugruppe eines Traktors.

Ein Reservoir für die drucklose Speicherung von Hydrauliköl ist in Fig. 1 mit 1 bezeichnet. Von einem tiefsten Punkt 2 des Reservoirs 1 aus erstreckt sich eine Saugleitung eines ersten Hydraulikkreises zu einer Pumpe 3, die unmittelbar mit einer Abtriebswelle einer (nicht dargestellten) Brennkraftmaschine des Traktors verbunden und durch diese angetrieben ist. Mit dem Druckanschluss der Pumpe 3 ist über ein Druckfilter 7 ein Servomotor 4 verbunden, der, gesteuert durch ein Lenkrad 5, eine Lenkkraft auf eine oder zwei lenkbare Achsen des Traktors ausübt.

Stromabwärts vom Servomotor 4 ist ein erster Hydraulikölkühler 6 angeschlossen. Zwischen dem Servomotor 4 und dem Kühler 6 ist ein Wegeventil 8 in den Hydraulikkreis eingefügt. Der Schaltzustand des Wegeventils 8 kann durch eine Steuerschaltung 9 in Abhängigkeit von der von einem Temperatursensor 10 an dem Kühler 6 gemessenen Öltemperatur gesteuert sein; bei der hier gezeigten Ausgestaltung jedoch dient zu diesem Zweck ein Wachselement 26, das in engem thermischem Kontakt mit dem in dem Hydraulikkreis zirkulierenden Öl steht und dessen Ausdehnung bei Erwärmung eine Verstellbewegung des Wegeventils 8 antreibt. Liegt die Temperatur des Öls unterhalb eines Grenzwerts von zum Beispiel 55°C, so hält das Wachselement 26 das Wegeventil 8 in einem ersten Schaltzustand 8.1, in der unter Umgehung des Kühlers 6 auf einer Leitung 11 direkt vom Ausgang des Servomotors 4 über einen Rücklauffilter 27 zurück zum Reservoir 1 geführt wird. Das Öl wird daher nicht gekühlt, und seine Temperatur steigt schnell.

Wenn die Öltemperatur den ersten Grenzwert überschreitet, geht das Wegeventil 8 in einen zweiten Schaltzustand 8.2 über, in welchem ein Teil des Ölstroms über den Kühler 6 gelenkt wird, während der Rest weiterhin auf der Umgehungsleitung 11 um den Kühler 6 herumgeführt wird. Dadurch ist der Temperaturanstieg des Öls verlangsamt, ein stationärer Wert aber noch nicht erreicht.

Erst wenn die Öltemperatur einen zweiten Grenzwert von zum Beispiel 75°C übersteigt, geht das Wegeventil 8 in seinen dritten Schaltzustand 8.3 über, in welchem der Weg über die Umgehungsleitung 11 gesperrt ist und der gesamte Ölstrom über den Kühler 6 läuft. Da bereits vor dem Überschreiten des zweiten Grenzwerts der Anstieg der Öltemperatur verlangsamt war, kann eine Überhitzung des Öls beim Übergang zum dritten Schaltzustand des Wegeventils 8 vermieden werden.

Als eine Sicherheitsmaßnahme, insbesondere für den Fall, dass bei niedrigen Umgebungstemperaturen Ölreste, die deutlich kälter als die vom Sensor 10 erfasste Temperatur und dementsprechend zähflüssig sind, die Zirkulation behindern, ist parallel zu dem Wegeventil 8 und dem Kühler 6 ein Entlastungsventil 12 vorgesehen, das bei Überschreitung einer Grenzdruckdifferenz zwischen seinen Anschlüssen durchlässig wird.

Einer vereinfachten Ausgestaltung zufolge könnte das Entlastungsventil 12 das Wegeventil 8 ersetzen, da es effektiv wie dieses warmes Öl durch den Kühler 6 hindurch und kaltes an ihm vorbeilenkt. Nachteilig ist jedoch, dass der zum Öffnen des Entlastungsventils 12 erforderliche Druck an diesem ständig bestehen bleibt, während Öl hindurchfließt, so dass die Pumpe 3 in der Lage sein muss, bei einem Kaltstart einen sehr hohen Ausgangsdruck zu liefern, um das Entlastungsventil zu öffnen und einen ausreichend hohen Ölstrom in Gang zu halten.

Das Reservoir 1, die Pumpe 3, der Servomotor 4, der Kühler 6, die Filter 7, 27 und die sie verbindenden Leitungen bilden einen ersten Hydraulikkreis.

In diesem ersten Hydraulikkreis sind zwischen einem Auslass des Servomotors 4 und dem Einlass des Wegeventils 8 zwei Verzweigungen 13, 14 vorgesehen. Ein zweiter Hydraulikkreis hat mit dem oben beschriebenen ersten diese zwei Verzweigungen 13, 14 und ein sich zwischen diesen erstreckendes Leitungsstück 15 gemeinsam. An einem zweiten sich zwischen den Verzweigungen 13, 14 erstreckenden Abschnitt des zweiten Hydraulikkreises sind eine Pumpe 16 mit verstellbarem Durchsatz, ein Wegeventil 17 und ein Hydraulikmotor 18 zum Antreiben eines Lüfters 19 angeordnet. Ein Sauganschluss der Pumpe 16 ist mit der bezogen auf die Zirkulationsrichtung des ersten Hydraulikkreises stromaufwärtigen Verzweigung 13 verbunden. Ein Druckanschluss der Pumpe 16 ist über das Wegeventil 17 wahlweise mit einem beliebigen von zwei verschiedenen Anschlüssen des Hydraulikmotors 18 verbunden, wobei der jeweils andere Anschluss des Hydraulikmotors 18 über das Wegeventil 17 mit der stromabwärtigen Verzweigung 14 verbunden ist. Die Pumpe 16 treibt somit einen Ölstrom an, der auf dem gemeinsamen Leitungsstück 15 demjenigen der Pumpe 3 entgegengesetzt ist. Ist der Durchsatz beider Pumpen derselbe, dann ist der Durchsatz des Leitungsstücks 15 Null, und das gesamte von der Pumpe 3 geförderte Öl fließt in einer Reihenschaltung auch durch die Pumpe 16 und den Hydraulikmotor 18. Ist der Durchsatz der Pumpe 16 kleiner, dann verteilt sich der Ölstrom der Pumpe 3 auf das Leitungsstück 15 einerseits und den über die Pumpe 16 und den Hydraulikmotor 18 führenden Weg andererseits. Der gesamte über die Pumpe 16 laufende Ölstrom passiert anschließend auch den Kühler 6 und das Reservoir 1.

Wenn der Kühlbedarf der vom Lüfter 19 belüfteten Aggregate hoch ist und der Durchsatz der Pumpe 16 dementsprechend höher als derjenige der Pumpe 3 eingestellt ist, kehrt sich die Strömungsrichtung im Leitungsstück 15 um, so dass ein Teil des Öls im geschlossenen Kreislauf, von der Pumpe 16 und dem Hydraulikmotor 18 zur Verzweigung 14 und von dort über das Leitungsstück 15 zurück zur Verzweigung 13, zirkuliert.

Die zur Aufrechterhaltung des hohen Durchsatzes erforderliche Antriebsleistung der Pumpe 16 ist gering, da das im geschlossenen Kreis umlaufende Öl nicht durch den Kühler 6 und die Filter 7, 27 gepresst werden muss. Eine Überhitzung des Öls im zweiten Kreislauf wird dennoch vermieden, da die Pumpe 3 ständig mit nur wenig veränderlicher Förderrate relativ kühles Öl nachliefert. Da die Verzweigungen 13, 14 durch das Leitungsstück 15 räumlich getrennt sind, kann dieses kühle Öl nicht unter Umgehung des zweiten Hydraulikkreises weiter zum Kühler 6 fließen, sondern ist gezwungen, sich mit dem in diesem Kreis zirkulierenden Öl zu mischen, so dass das im geschlossenen Kreis umlaufende Öl kontinuierlich ausgetauscht wird.

Hydraulikkreise, die austauschbare Verbraucher versorgen, haben im Allgemeinen Leitungskupplungen, die von einem Benutzer beim An- und Abbau eines Verbrauchers geschlossen bzw. geöffnet werden und über die Verunreinigungen in das Hydrauliksystem gelangen können. Der erste Hydraulikkreis ist frei von solchen Kupplungen, und der Druckfilter 7 verhindert, dass Verunreinigungen aus einem solchen Hydraulikkreis über den Tank 1 im ersten Hydraulikkreis in Umlauf geraten. Das darin zirkulierende Öl ist daher sauber genug, um ggf. den zweiten Hydraulikkreis mehrmals hintereinander zu durchlaufen.

Zu den vom Lüfter 19 mit Kühlluft versorgten Aggregaten gehören neben dem bereits beschriebenen Hydraulikölkühler 6 noch ein oder mehrere weitere Kühler, wie etwa ein Motorkühler 20, in dem von einer Pumpe 25 umgewälztes Kühlwasser zirkuliert, ein Getriebeölkühler 21 und, falls dem Verbrennungsmotor ein Kompressor zugeordnet ist, ein Ladeluftkühler. Auch diesen weiteren jeden Kühlern 20, 21 ist jeweils ein eigener Temperatursensor 22 zugeordnet, und die Steuerschaltung 9 ist mit den Sensoren 22 verbunden, um den Durchsatz der Pumpe 16 in Abhängigkeit von der erfassten Temperatur desjenigen Kühlers 6, 20, 21, zu steuern, dessen Kühlbedarf als am höchsten erkannt wird.

Durch Umschalten des Wegeventils 17 ist es möglich, die Laufrichtung des Hydraulikmotors 18 und damit die Blasrichtung des Lüfters 19 umzukehren. Wenn zum Beispiel in an sich bekannter Weise ein Block mit den diversen Kühlern 6, 20, 21 unmittelbar an einem vorderen Ende der Karosserie des Traktors, hinter einem Kühlergrill oder dergleichen, angeordnet ist und dahinter der Lüfter 19 platziert ist, dann ist die normale Laufrichtung des Lüfters 19 so gewählt, dass dieser Luft durch den Kühlergrill und den dahinterliegenden Block der Kühler 6, 20, 21 saugt. Während des Betriebs des Lüfters lagern sich Partikel an den Kühlern 6, 20, 21 ab, die den Wärmeaustausch zwischen diesen und der hindurch streichenden Luft beeinträchtigen. Eine Erwärmung der Kühler wird von den Sensoren 10, 22 erfasst und veranlasst die Steuerschaltung 9 zunächst, die Förderrate der Pumpe 16 heraufzusetzen. Wenn jedoch die maximale Förderrate der Pumpe 16 erreicht ist und immer noch an wenigstens einem der Kühler 6, 20, 21 eine Überschreitung eines Temperaturgrenzwerts festgestellt wird, erkennt die Steuerschaltung 9, dass die Funktion der Kühler beeinträchtigt sein muss.

Dies kann einer einfachen Ausgestaltung zufolge dazu führen, dass dem Fahrer ein Warnsignal angezeigt wird, um ihn auf die Überhitzung hinzuweisen. Es obliegt dann dem Fahrer, die Pumpe 16 auf minimalen Durchsatz zu stellen. Dies veranlasst die Steuerschaltung 9, einen Schaltimpuls an das Wegeventil 17 zu senden, der dieses in dessen in Fig. 1 gezeigte Normalstellung versetzt, sofern es sich nicht bereits in dieser befindet. Mit Hilfe eines Bedienelements am Armaturenbrett kann der Fahrer nun das Wegeventil 17 in seine zweite Stellung umschalten. Wenn er die Pumpe 16 wieder auf hohen, vorzugsweise maximalen Durchsatz stellt, läuft der Hydraulikmotor 18 in umgekehrter Richtung und bläst Luft von hinten durch den Kühlerblock. Abgelagerte Partikel lösen sich und werden aus dem Kühlerblock ausgetrieben. Ein anschließender Stillstand der Pumpen 3, 16 löst einen neuerlichen Schaltimpuls an das Wegeventil 17 aus, so dass es zur Normalstellung zurückkehrt und beim nächsten Start der Lüfter 19 wieder in normaler Richtung läuft.

Denkbar ist auch, im Fehlerfall die Steuerschaltung 9 die Laufrichtung des Hydraulikmotors 18 im laufenden Betrieb umschalten zu lassen, wenn an einem der Kühler eine überhöhte Temperatur erfasst wird und die Förderrate der Pumpe 16 maximal ist. Um in einem solchen Fall Druckspitzen abzufangen, die während des Umschaltens des Wegeventils 17 auftreten können, sind zweckmäßigerweise ein Entlastungsventil 23 und ein Nachsaugventil 24 mit Saug- und Druckanschluss der Pumpe 16 verbunden.

Fig. 2 zeigt eine zweite Ausgestaltung der erfindungsgemäßen Lüftungsbaugruppe. Ihre Komponenten sind dieselben wie bei der Ausgestaltung der Fig. 1 und werden nicht erneut erläutert. Der wesentliche Unterschied zur Ausgestaltung der Fig. 1 ist die Platzierung des gemeinsamen Leitungsabschnitts 15. Da in der Ausgestaltung der Fig. 2 der Kühler 6 stromaufwärts vom gemeinsamen Leitungsabschnitt 15 angeordnet ist, passiert der gesamte von der Pumpe 3 umgewälzte Ölstrom den Kühler 6, so dass auch Lecköl, das an der Pumpe 16 oder dem Motor 18 entweicht und über Leckölleitungen 28 zurück zum Tank 1 geführt wird, vorher gekühlt worden ist. Bei der Ausgestaltung der Fig. 1 hingegen gelangt Lecköl, das an der Pumpe 16 oder dem Motor 18 entweicht, über die Leckölleitungen 28 ungekühlt zurück zum Tank 1.

**Bezugszeichen**
- 1: Reservoir
- 2: tiefster Punkt
- 3: Pumpe
- 4: Servomotor
- 5: Lenkrad
- 6: Hydraulikölkühler
- 7: Druckfilter
- 8: Wegeventil
- 9: Steuerschaltung
- 10: Temperatursensor
- 11: Umgehungsleitung
- 12: Entlastungsventil
- 13: Verzweigung
- 14: Verzweigung
- 15: Leitungsstück
- 16: Pumpe
- 17: Wegeventil
- 18: Hydraulikmotor
- 19: Lüfter
- 20: Motorkühler
- 21: Getriebeölkühler
- 22: Temperatursensor
- 23: Entlastungsventil
- 24: Nachsaugventil
- 25: Pumpe
- 26: Wachselement
- 27: Rücklauffilter
- 28: Leckölleitung

## Patentansprüche

1. Hydraulische Baugruppe für ein insbesondere landwirtschaftliches Nutzfahrzeug, mit einem ersten Hydraulikkreis (1, 3, 4, 6, 7, 8, 27), in dem eine erste Pumpe (3), ein Stellantrieb (4) einer Servolenkung, ein Kühler (6) für in dem ersten Hydraulikkreis zirkulierendes Hydraulikfluid und ein Reservoir (1) in Reihe verbunden sind, und einem zweiten Hydraulikkreis (16, 17, 18), in dem eine zweite Pumpe (16) und ein hydraulischer Lüftermotor (18) in Reihe verbunden sind und der einen Leitungsabschnitt (15) mit dem ersten Hydraulikkreis (1, 3, 4, 6, 7, 8) gemeinsam hat, **dadurch gekennzeichnet, dass** die zwei Hydraulikkreise im gemeinsamen Leitungsabschnitt (15) gegenläufige Zirkulationsrichtungen aufweisen.

2. Hydraulische Baugruppe nach Anspruch 1, **dadurch gekennzeichnet, dass** der Kühler (6) im ersten Hydraulikkreis stromabwärts oder stromaufwärts von dem gemeinsamen Leitungsabschnitt (15) angeordnet ist.

3. Hydraulische Baugruppe nach Anspruch 1 oder 2, **dadurch gekennzeichnet, dass** ein Filter (7, 27) im ersten Hydraulikkreis außerhalb des gemeinsamen Leitungsabschnitts (15) angeordnet ist.

4. Hydraulische Baugruppe nach Anspruch 1, 2 oder 3, **dadurch gekennzeichnet, dass** der Durchsatz pro Zeiteinheit der zweiten Pumpe (16) in weiterem Umfang variabel ist als der Durchsatz der ersten Pumpe (3).

5. Hydraulische Baugruppe nach einem der vorhergehenden Ansprüche, **gekennzeichnet durch** ein Wegeventil (8), das angeordnet ist, um den Kühler (6) aus dem ersten Hydraulikkreis auszukoppeln.

6. Hydraulische Baugruppe nach Anspruch 5, **dadurch gekennzeichnet, dass** das Wegeventil (8) im ersten Hydraulikkreis zwischen dem gemeinsamen Leitungsabschnitt (15) und dem Kühler (6) angeordnet ist.

7. Hydraulische Baugruppe nach Anspruch 5 oder 6, **dadurch gekennzeichnet, dass** das Wegeventil (8) anhand einer am ersten Hydraulikkreis herrschenden Temperatur gesteuert ist.

8. Hydraulische Baugruppe nach einem der vorhergehenden Ansprüche, **dadurch gekennzeichnet, dass** ein Entlastungsventil (12) parallel zu dem Kühler (6) angeordnet ist.

9. Hydraulische Baugruppe nach einem der vorhergehenden Ansprüche, **dadurch gekennzeichnet, dass** die Laufrichtung des Lüftermotors (18) zwischen einer Normallaufrichtung und einer Ausnahmelaufrichtung umkehrbar ist.

10. Hydraulische Baugruppe nach Anspruch 9, **dadurch gekennzeichnet, dass** ein Steuerelement (9) eingerichtet ist, den Lüftermotor (18) von der Ausnahmelaufrichtung auf die Normallaufrichtung umzuschalten, wenn die Pumpe (16) auf minimalen Durchsatz eingestellt ist.

11. Hydraulische Baugruppe nach Anspruch 9, **dadurch gekennzeichnet, dass** ein Steuerelement (9) eingerichtet ist, den Lüftermotor (18) auf die Ausnahmelaufrichtung umzuschalten, wenn die Temperatur des Hydraulikfluids über einer Grenztemperatur liegt.

12. Hydraulische Baugruppe nach Anspruch 11, **dadurch gekennzeichnet, dass** das Steuerelement (9) eingerichtet ist, die Umschaltung auf die Ausnahmelaufrichtung nur vorzunehmen, wenn die Grenztemperatur überschritten und gleichzeitig der Durchsatz der zweiten Pumpe (16) maximal ist.

13. Hydraulische Baugruppe nach einem der Ansprüche 9 bis 12, **dadurch gekennzeichnet, dass** ein Wegeventil (17) im zweiten Hydraulikkreis angeordnet ist, um einen Anschluss des Lüftermotors (18) wahlweise mit einem Sauganschluss oder einem Druckanschluss der zweiten Pumpe (16) zu verbinden.

14. Nutzfahrzeug, insbesondere landwirtschaftliches Fahrzeug, mit einer hydraulischen Baugruppe nach einem der vorhergehenden Ansprüche und mit einem Lüfter (19), **dadurch gekennzeichnet, dass** der Lüfter (19) neben dem Kühler (6) des ersten Hydraulikkreises einen Verbrennungsmotorkühler (20) und/oder einen Ladeluftkühler und/oder einen Getriebeölkühler (21) mit Luft versorgt.

## Claims

1. A hydraulic assembly for an in particular agricultural utility vehicle, comprising a first hydraulic circuit (1, 3, 4, 6, 7, 8, 27) in which a first pump (3), an adjusting drive (4) of a power steering arrangement, a radiator (6) for hydraulic fluid circulating in the first hydraulic circuit and a reservoir (1) are connected in series, and a second hydraulic circuit (16, 17, 18) in which a second pump (16) and a hydraulic fan motor (18) are connected in series and which has a conduit portion (15) in common with the first hydraulic circuit (1, 3, 4, 6, 7, 8), **characterised in that** the two hydraulic circuits have mutually opposite circulation directions in the common conduit portion (15).

2. A hydraulic assembly according to claim 1 **characterised in that** the fan (6) in the first hydraulic circuit is arranged downstream or upstream of the common conduit portion (15).

3. A hydraulic assembly according to claim 1 or claim 2 **characterised in that** a filter (7, 27) in the first hydraulic circuit is arranged outside the common conduit portion (15).

4. A hydraulic assembly according to claim 1, claim 2 or claim 3 **characterised in that** the throughput per unit of time of the second pump (16) is variable to a greater extent than the throughput of the first pump (3).

5. A hydraulic assembly according to one of the preceding claims **characterised by** a directional flow control valve (8) arranged to cut the radiator (6) out of the first hydraulic circuit.

6. A hydraulic assembly according to claim 5 **characterised in that** the directional flow control valve (8) in the first hydraulic circuit is arranged between the common conduit portion (15) and the radiator (6).

7. A hydraulic assembly according to claim 5 or claim 6 **characterised in that** the directional flow control valve (8) is controlled on the basis of a temperature prevailing at the first hydraulic circuit.

8. A hydraulic assembly according to one of the preceding claims **characterised in that** a relief valve (12) is arranged parallel to the radiator (6).

9. A hydraulic assembly according to one of the preceding claims **characterised in that** the direction of operation of the fan motor (18) is reversible between a normal operating direction and an exceptional operating direction.

10. A hydraulic assembly according to claim 9 **characterised in that** a control element (9) is adapted to switch the fan motor (18) over from the exceptional operating direction to the normal operating direction if the pump (16) is set to minimum throughput.

11. A hydraulic assembly according to claim 9 **characterised in that** a control element (9) is adapted to switch the fan motor (18) over to the exceptional operating direction if the temperature of the hydraulic fluid is above a limit temperature.

12. A hydraulic assembly according to claim 11 **characterised in that** the control element (9) is adapted to implement switching-over to the exceptional operating direction only if the limit temperature is exceeded and at the same time the throughput of the second pump (16) is at a maximum.

13. A hydraulic assembly according to one of claims 9 to 12 **characterised in that** a directional flow control valve (17) is arranged in the second hydraulic circuit in order to connect a connection of the fan motor (18) selectively to a suction connection or a pressure connection of the second pump (16).

14. A utility vehicle, in particular an agricultural vehicle, having a hydraulic assembly according to one of the preceding claims and a fan (19), **characterised in that** besides the radiator (6) of the first hydraulic circuit the fan (19) supplies air to an internal combustion engine radiator (20) and/or an intercooler and/or a transmission radiator (21).

## Revendications

1. Ensemble hydraulique pour un véhicule utilitaire, en particulier agricole, comprenant un premier circuit hydraulique (1, 3, 4, 6, 7, 8, 27), dans lequel une première pompe (3), un actionneur de positionnement (4) d'une direction assistée, un refroidisseur (6) pour un fluide hydraulique circulant dans le premier circuit hydraulique et un réservoir (1) sont reliés en série, et comprenant un deuxième circuit hydraulique (16, 17, 18) dans lequel une deuxième pompe (16) et un moteur hydraulique de ventilateur (18) sont reliés en série et qui a un tronçon de conduite (15) en commun avec le premier circuit hydraulique (1, 3, 4, 6, 7, 8), **caractérisé en ce que** les deux circuits hydrauliques présentent des sens de circulation opposés dans le tronçon de conduite commun (15).

2. Ensemble hydraulique selon la revendication 1, **caractérisé en ce que** le refroidisseur (6) du premier circuit hydraulique est disposé en aval ou en amont du tronçon de conduite commun (15).

3. Ensemble hydraulique selon la revendication 1 ou 2, **caractérisé en ce qu'**un filtre (7, 27) est disposé dans le premier circuit hydraulique en dehors du tronçon de conduite commun (15).

4. Ensemble hydraulique selon la revendication 1, 2 ou 3, **caractérisé en ce que** le débit par unité de temps de la deuxième pompe (16) est variable dans une plus large mesure que le débit de la première pompe (3).

5. Ensemble hydraulique selon l'une des revendications précédentes, **caractérisé par** un distributeur (8) qui est disposé pour découpler le refroidisseur (6) du premier circuit hydraulique.

6. Ensemble hydraulique selon la revendication 5, **caractérisé en ce que** le distributeur (8) est disposé dans le premier circuit hydraulique entre le tronçon de conduite commun (15) et le refroidisseur (6).

7. Ensemble hydraulique selon la revendication 5 ou 6, **caractérisé en ce que** le distributeur (8) est commandé à l'aide d'une température régnant dans le premier circuit hydraulique.

8. Ensemble hydraulique selon l'une des revendications précédentes, **caractérisé en ce qu'**une soupape de décharge (12) est disposée en parallèle sur le refroidisseur (6).

9. Ensemble hydraulique selon l'une des revendications précédentes, **caractérisé en ce que** le sens de rotation du moteur de ventilateur (18) est réversible entre un sens de rotation normal et un sens de rotation exceptionnel.

10. Ensemble hydraulique selon la revendication 9, **caractérisé en ce qu'**un élément de commande (9) est conçu pour faire passer le moteur de ventilateur (18) du sens de rotation exceptionnel au sens de rotation normal lorsque la pompe (16) est réglée au débit minimal.

11. Ensemble hydraulique selon la revendication 9, **caractérisé en ce qu'**un élément de commande (9) est conçu pour faire passer le moteur de ventilateur (18) au sens de rotation exceptionnel lorsque la température du fluide hydraulique est supérieure à une température limite.

12. Ensemble hydraulique selon la revendication 11, **caractérisé en ce que** l'élément de commande (9) est conçu pour effectuer le passage au sens de rotation exceptionnel seulement lorsque la température limite est dépassée et qu'en même temps le débit de la deuxième pompe (16) est maximal.

13. Ensemble hydraulique selon l'une des revendications 9 à 12, **caractérisé en ce qu'**un distributeur (17) est disposé dans le deuxième circuit hydraulique pour relier un raccord du moteur de ventilateur (18), au choix, à un raccord d'aspiration ou à un raccord de refoulement de la deuxième pompe (16).

14. Véhicule utilitaire, en particulier véhicule agricole, équipé d'un ensemble hydraulique selon l'une des revendications précédentes et d'un ventilateur (19), **caractérisé en ce que** le ventilateur (19) alimente en air, outre le refroidisseur (6) du premier circuit hydraulique, un radiateur de moteur à combustion (20) et/ou un refroidisseur d'air de suralimentation et/ou un refroidisseur d'huile de boîte de vitesses (21).
